Europäisches Patentamt

European Patent Office

Office européen des brevets

(11) Numéro de publication: **0 424 269 A1**

# DEMANDE DE BREVET EUROPEEN

(21) Numéro de dépôt: **90402941.0**

(22) Date de dépôt: **19.10.90**

(51) Int. Cl.⁵: **H04N 7/00, H04N 5/907**

(30) Priorité: **20.10.89 FR 8913745**

(43) Date de publication de la demande:
**24.04.91 Bulletin 91/17**

(84) Etats contractants désignés:
**DE ES GB IT NL**

(71) Demandeur: **LABORATOIRE EUROPEEN DE RECHERCHES ELECTRONIQUES AVANCEES**
**9, Place des Vosges La Défense 5**
**F-92400 Courbevoie(FR)**

(72) Inventeur: **Litzelmann, Michel**
**THOMSON-CSF, SCPI, Cédex 67**
**F-92045 Paris la Défense(FR)**
Inventeur: **Moraillon, Jean-Yves**
**THOMSON-CSF, SCPI, Cédex 67**
**F-92045 Paris la Défense(FR)**

(74) Mandataire: **Ruellan-Lemonnier, Brigitte et al**
**THOMSON-CSF SCPI**
**F-92045 PARIS LA DEFENSE CEDEX 67(FR)**

(54) Dispositif de compensation de mouvement et récepteur de télévision comportant un tel dispositif.

(57) L'invention se rapporte principalement à un dispositif de compensation de mouvement et à un récepteur de télévision comportant un tel dispositif.

L'invention concerne le calcul des valeurs d'éléments d'images non transmises dans un standard de télévision à partir des trames précédentes et/ou suivantes transmises et des vecteurs de mouvement.

L'originalité du dispositif selon la présente invention repose dans l'utilisation d'une mémoire vive dynamique (21) dont la gestion de l'adressage en lecture en fonction de l'adresse d'écriture et des données d'assitance permet de retrouver en sortie les données pertinentes.

La présente invention s'applique principalement à la compensation de mouvement dans l'affichage d'images. La présente invention s'applique notamment à la réalisation de télévisions haute définition selon la norme HD-MAC.

FIG_13

# DISPOSITIF DE COMPENSATION DE MOUVEMENT ET RECEPTEUR DE TELEVISION COMPORTANT UN TEL DISPOSITIF

L'invention se rapporte principalement à un dispositif de compensation de mouvement et à un récepteur de télévision comportant un tel dispositif.

Pour améliorer la qualité de l'image de télévision, on est amené à augmenter le nombre d'informations affichées sur les écrans. Dans la mesure où les canaux de transmission ont des capacités limitées, on transmet dans le canal de transmission une quantité d'informations moindres et l'on reconstitue l'information manquante. Dans le cas du présent Brevet, l'information manquante est reconstituée à partir d'informations transmises associées de signaux d'assistance. Les signaux d'assistance comportent par exemple l'information sur l'évolution qu'a subi l'image, ou avantageusement, une partie de l'image depuis que la trame précédente d'image a été transmise. Cette information se retrouve par exemple sous la forme de vecteurs de mouvement à associer à des blocs d'éléments d'images (pixels en terminologie anglo-saxonne). Il est ainsi possible d'effectuer une compensation de mouvement en affichant les éléments d'images à l'endroit où ils doivent se trouver sur l'écran après le déplacement.

La présente invention concerne un dispositif de compensation de mouvement particulièrement performant utilisant une mémoire vive pour stocker les éléments d'image traités. Le réarrangement d'informations nécessaires à la compensation de mouvement est effectuée par une simple manipulation des adresses d'écriture, ou avantageusement, de lecture.

Le dispositif selon la présente invention peut être associé à d'autres dispositifs destinés à améliorer la qualité d'image affichée en présence d'un mode (le transmission limité comme par exemples les interpolateurs permettant de reconstituer les éléments d'images non transmis.

L'invention a principalement pour objet un dispositif de compensation de mouvement pour récepteur de télévision permettant de reconstituer une image non transmise à afficher à partir d'images transmises et d'informations sur l'évolution de ces images caractérisé par le fait qu'il comporte des moyens de mémorisation, des moyens de contrôle d'écriture et des moyens de contrôle de lecture permettant, par modification de l'ordre de lecture par rapport à l'écriture et par le choix d'éléments d'images stockées de reconstituer les images manquantes.

L'invention a aussi pour un dispositif caractérisé par le fait que le dispositif de contrôle d'écriture fournit au dispositif de mémorisation les adresses dont la progression est arithmétique et que le réarrangement d'informations de façon à obtenir la compensation de mouvement est effectué par le dispositif de contrôle de lecture.

L'invention a aussi pour objet un dispositif caractérisé par le fait qu'il comporte des moyens d'interpolation permettant de reconstituer les éléments d'images non transmis à partir d'éléments d'images transmis.

L'invention a aussi pour objet un dispositif caractérisé par le fait que les moyens d'interpolation permettent de reconstituer, par interpolation, des éléments d'images source à partir desquels on calcule les éléments d'images à afficher en utilisant l'information d'évolution dans le temps des images.

L'invention a aussi pour objet un dispositif caractérisé par le fait que les moyens de mémorisation (comportent les mémoires vives électroniques dynamiques vidéo (D RAM VIDEO).

L'invention a aussi pour objet un dispositif caractérisé par le fait qu'il comporte des moyens permettant d'augmenter le temps d'accès au dispositif de mémorisation sans diminuer le débit.

L'invention a aussi pour objet un dispositif caractérisé par le fait que les moyens d'interpolation comportent, connectés à la sortie des moyens de mémorisation une pluralité de registres à décalage dont les sorties sont connectées à des multiplexeurs, comportant des moyens de sommation additionnant les valeurs sélectionnées par le multiplexeur ; les registres à décalage sont connectés en série de façon à ce que entre deux registres à décalage successifs il existe un retard d'une ligne d'image.

L'invention a aussi pour objet un dispositif caractérisé par le fait qu'il comporte des multiplieurs connectés aux sorties des multiplexeurs permettant de multiplier les valeurs sélectionnées par des coefficients.

L'invention a aussi pour objet un dispositif caractérisé par le fait que le dispositif comporte 4 registres à décalage.

L'invention a aussi pour objet un dispositif caractérisé par le fait qu'il comporte en sortie un moyen de calcul comprenant trois lignes à retard induisant chacune un retard d'une ligne d'image, quatre multiplieurs dont les sorties sont connectées aux entrées d'un additionneur, les entrées des multiplieurs recevant les valeurs numériques des éléments d'images appartenant à quatre lignes d'images consécutives.

L'invention a aussi pour objet un dispositif caractérisé par le fait qu'il comporte connecté à la sortie du dispositif de mémorisation un registre à décalage dont les sorties sont connectées à l'entrée d'un multiplexeur.

L'invention a également pour objet un récepteur d'émission de télévision caractérisé par le fait qu'il comporte un dispositif selon l'une quelconque des revendications 1 à 11.

L'invention a aussi pour objet un récepteur de télévision caractérisé par le fait que ledit récepteur est un récepteur de télévision d'émission à haute définition (TVHD).

L'invention sera mieux comprise au moyen de la description ci-après et des figures annexées données comme des exemples non limitatifs parmi lesquels :

- la figure 1 est un premier schéma expliquant le principe du fonctionnement de la compensation de mouvement ;
- la figure 2 est un deuxième schéma expliquant le principe du fonctionnement de la compensation de mouvement ;
- la figure 3 est un troisième schéma expliquant le principe du fonctionnement de la compensation de mouvement ;
- la figure 4 est un schéma expliquant la compensation de mouvement à partir de deux lignes d'images effectivement transmises ;
- la figure 5 est un schéma expliquant la compensation de mouvement à partir d'une ligne non transmise ;
- la figure 6 est un schéma illustrant le mode de transmission utilisé dans la norme HD-MAC ;
- la figure 7 est un schéma illustrant le mode 40ms de la norme HD-MAC ;
- la figure 8 est un schéma d'un exemple de réalisation d'un récepteur de télévision selon la norme HD-MAC ;
- la figure 9 est un premier exemple de réalisation d'un dispositif de compensation de mouvement selon la présente invention ;
- la figure 10 est un schéma d'un exemple de réalisation d'un dispositif de contrôle de lecture susceptible d'être mis en oeuvre dans le dispositif selon la présente invention ;
- la figure 11 est un schéma d'un exemple de réalisation du dispositif selon la présente invention ;
- la figure 12 est un schéma d'un dispositif de calcul susceptible d'être mis en oeuvre dans le dispositif selon la présente invention ;
- la figure 13 est un exemple de réalisation particulièrement performant du dispositif selon la présente invention.

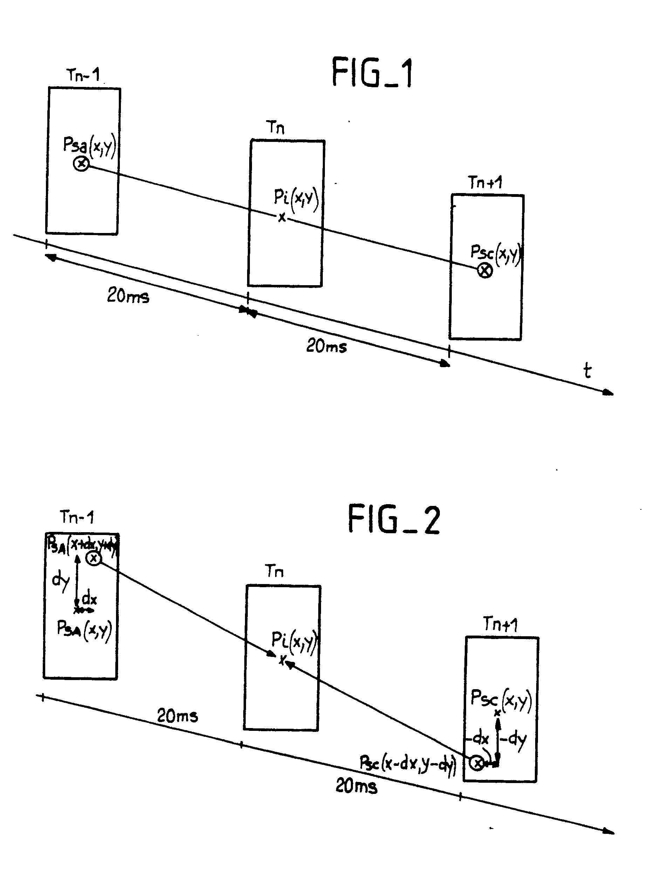

Sur les figures 1 à 13, on a utilisé les mêmes références pour désigner les mêmes éléments.

Sur la figure 1, on peut voir le principe de la compensation de mouvement. Pour réduire la quantité d'informations à transmettre on ne transmet pas toutes les trames d'images à afficher.

Sur la figure, on a référencé $T_n$ la trame non transmise. La trame $T_n$ sera affichée temporellement entre la trame transmise $T_{n-1}$ et la trame transmise $T_{n+1}$. Les trames successives sont par exemple distantes de 20ms ce qui correspond à un temps écoulé entre deux trames transmises successives de 40ms. Il est bien entendu que la reconstruction de plusieurs trames non transmises successives ne sort pas du cadre de la présente invention.

Sur un point de l'image est affiché au point Psa (x, y) sur la trame $T_{n-1}$ et au point Psc (x,y) sur la trame $T_{n+1}$. Les points correspondants Pi (x, y) de la trame $T_n$ sont obtenus par calcul à partir de ces différences de position dans les deux trames successives transmises $T_{n+1}$ et $T_{n-1}$ et/ou à partir de signaux complémentaires transmis comportant l'information sur le mouvement de l'image. Ces informations complémentaires numériques sont avantageusement transmises sous forme de vecteurs de mouvement de blocs d'éléments d'images par exemple 16 éléments d'images * 16 éléments d'images.

Si la zone d'images qui contient le point Pi (x,y) est statique les points Psa (x,y), Psc (x,y) et Pi (x,y) sont identiques puisqu'ils ne subissent pas de déplacement spatial.

Sur la figure 2, on peut voir le principe du calcul de la position du point Pi (x,y) à partir des points mobiles. Le point source à partir duquel on calculera Pi (x, y) sont égaux à :

Psa1 = Psa (x + dx, y + dy)
Psc1 = Psc (x-dx, y-dy)

où dy est la composante verticale du vecteur de mouvement et dx la composante horizontale du vecteur de mouvement.

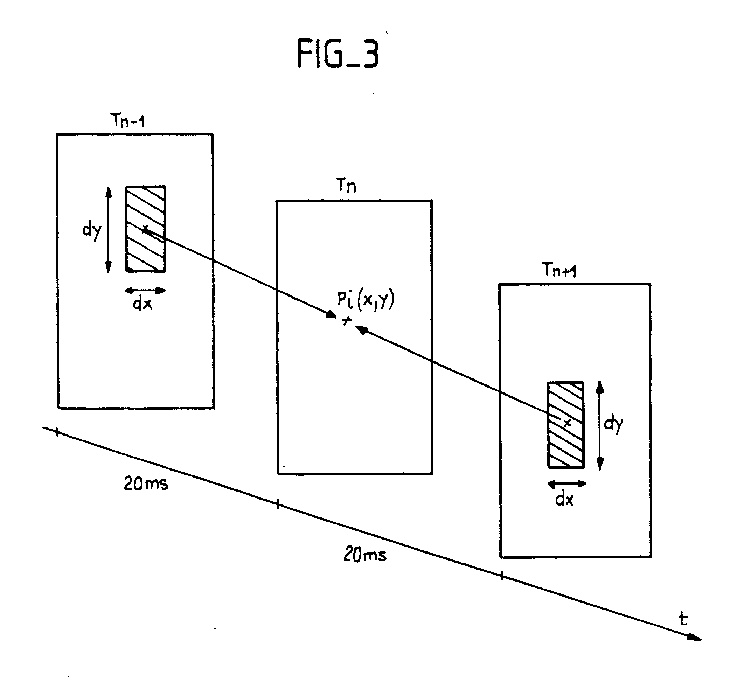

Avantageusement, comme illustré sur la figure 3, l'amplitude maximale du mouvement entre deux trames est limitée, soit que le mouvement rapide soit traité par un système différent, comme dans le cas du HD-MAC, soit ils ne sont pas du tout traités. La limitation de la vitesse du mouvement traitée par le système de compensation de mouvement est justifiée par le fait qu'un mouvement trop rapide risque de changer complètement l'image et non seulement d'en déplacer les éléments. Cette limitation permet de ne traiter autour des points à reconstituer qu'un nombre limité d'échantillons.

Le dispositif selon la présente invention peut avantageusement être associé à d'autres dispositifs destinés à réduire la quantité d'informations transmises. Par exemple, on peut l'associer à un dispositif d'interpolation permettant de reconstituer des éléments d'images non transmis à partir des valeurs des éléments d'images transmis. Dans un tel système il est possible que les éléments d'images source pour le dispositif de compensation de mouvement n'ait pas été transmis. A ce moment là on utilise comme élément d'image source des éléments d'images calculés. Il peut s'avérer avantageux d'associer les dispositifs de calcul au dispositif de compensation de mouvement.

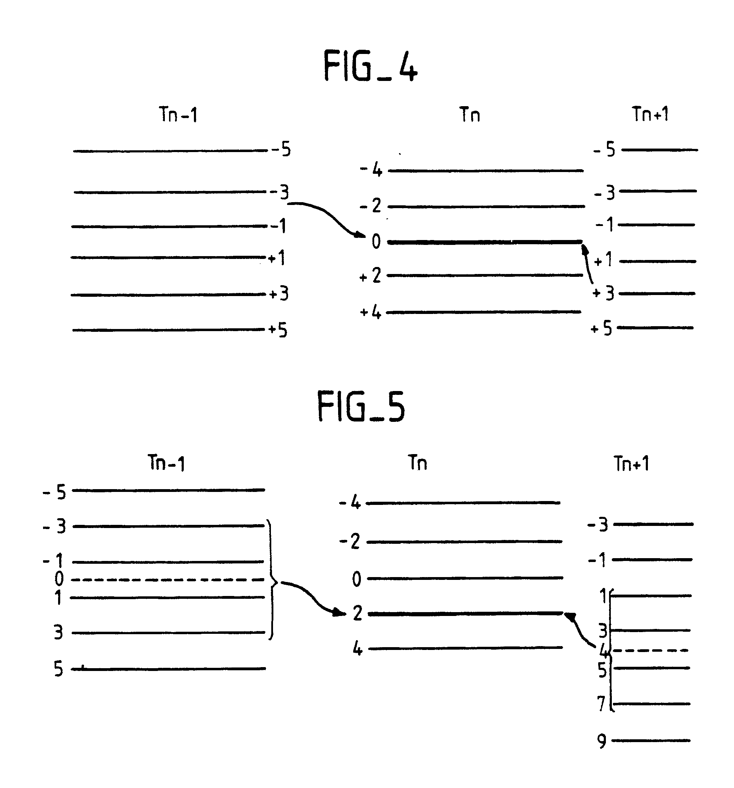

Sur les figures 4 et 5 on a illustré le mécanisme de compensation de mouvement dans le cas d'un système de transmission d'image de télévision dans lequel seule une ligne sur deux est transmise. Sur les figures 4 et 5 seules quelques lignes ont été représentées. Les trames $T_{n-1}$ et $T_{n+1}$ comportent les lignes impaires par exemple numérotées -5, -3, -1, 1, 3, 5. Dans l'exemple illustré sur la figure 4, le vecteur de mouvement est égal à -3. Cela signifie que pour afficher une ligne 0 de la trame $T_n$ on doit partir de la ligne -3 de la trame $T_{n-1}$ et/ou de la ligne +3 de la trame $T_{n+1}$. Ces mouvements sont représentés par des flèches sur les figures. Dans le cas d'une valeur impaire (exprimée en ligne d'image) de la composante verticale du vecteur de mouvement vertical les lignes de départ ont été effectivement transmises. Le cas contraire est illustré sur la figure 5 pour lequel la valeur du vecteur de mouvement est paire et égale à -2. Dans un tel cas les trames $T_{n-1}$ et $T_{n+1}$ ne disposent pas de la ligne respectivement 0 et 4 nécessaire au calcul de la ligne 2 de la trame $T_n$. Dans un tel cas on effectue, par calcul la détermination de la valeur de la ligne 0 et/ou de la ligne 4 des trames respectivement $T_{n-1}$ et $T_{n+1}$ ou au moins des éléments d'image de ces lignes qui interviennent à l'intérieur du bloc traité. Dans l'exemple illustré sur la figure 5, on effectue la moyenne des valeurs des quatre lignes successives centrées sur la ligne 0 comme par exemple la ligne -3, -1,1 et 3. On fait de même à partir de la ligne 1,3,5 et 7 de la trame $T_{n+1}$.

Le dispositif objet de la présente invention permet notamment la compensation de mouvement utilisée par un des modes de la norme HD-MAC. Le projet de norme HD-MAC de télévision haute définition doit être compatible avec le canal de transmission D2 MAC. Un tel canal permet la transmission de 312.5 lignes par période de 20ms avec 864 éléments d'images par ligne. Pour répondre aux normes de haute définition on veut pouvoir afficher 1 250 lignes comportant chacune 1 728 éléments d'images. Pour pouvoir effectuer un tel affichage, on adapte la structure d'échantillonnage et/ou la fréquence d'échantillonnage temporelle des trames.

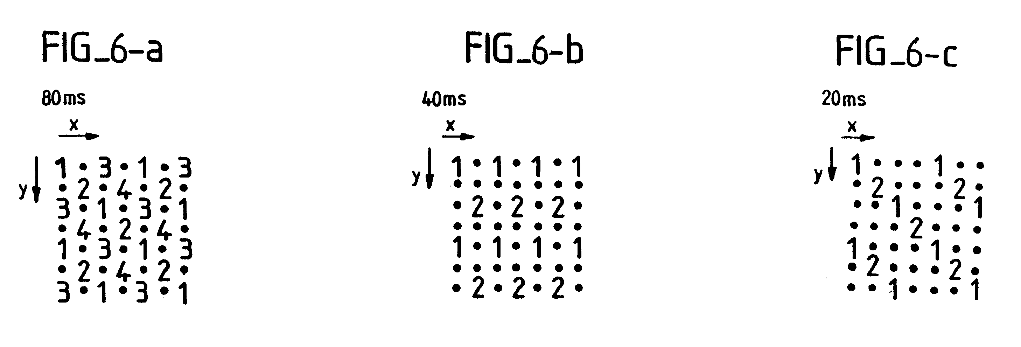

L'image est divisée en blocs de 16*16 éléments d'images. Selon la vitesse de mouvement des éléments affichés dans chaque bloc on choisit un mode de transmission. Le mode 80ms illustré sur la figure 6A est appliqué aux blocs statique.

Le mode 40ms, illustré sur la figure 6B est appliqué aux blocs en mouvement lent.

Le mode 20ms, illustré sur la figure 6C est appliqué aux blocs en mouvement rapide.

Sur la figure 6, les points représentent des éléments d'images non transmis, qui seront reconstitués par interpolation à partir d'éléments d'images transmis. Les chiffres représentent le numéro de la trame qui transmet l'élément d'image.

Dans le mode 80ms, illustré sur la figure 6A les éléments de la première trame sont transmis tous les quatre éléments d'image une ligne sur deux. Les éléments d'image sont placés en quinconce. Entre deux éléments successifs appartenant à la trame 1 sont placés les éléments appartenant à la trame 3.

Les éléments des trames 2 et 4 sont émis en alternance avec les éléments de trame 1 et 3 décalés d'un élément d'image.

Ainsi, la transmission des quatre trames successives permet la reconstitution d'un bloc statique en haute définition.

Dans un mode 40ms on émet un élément d'image sur 2, une ligne sur 4. Les éléments d'image de la trame 2 sont décalés d'un élément d'image et de deux lignes. Sur le mode 40ms on effectue une compensation de mouvement, objet de la présente invention.

En mode 20ms, illustré sur la figure 6C les éléments d'image de la trame 1 sont émis une ligne sur deux tous les quatre éléments d'image. De même, les éléments d'image de trame 2 sont émis toutes les deux lignes un élément d'image sur quatre mais décalés d'un élément d'image.

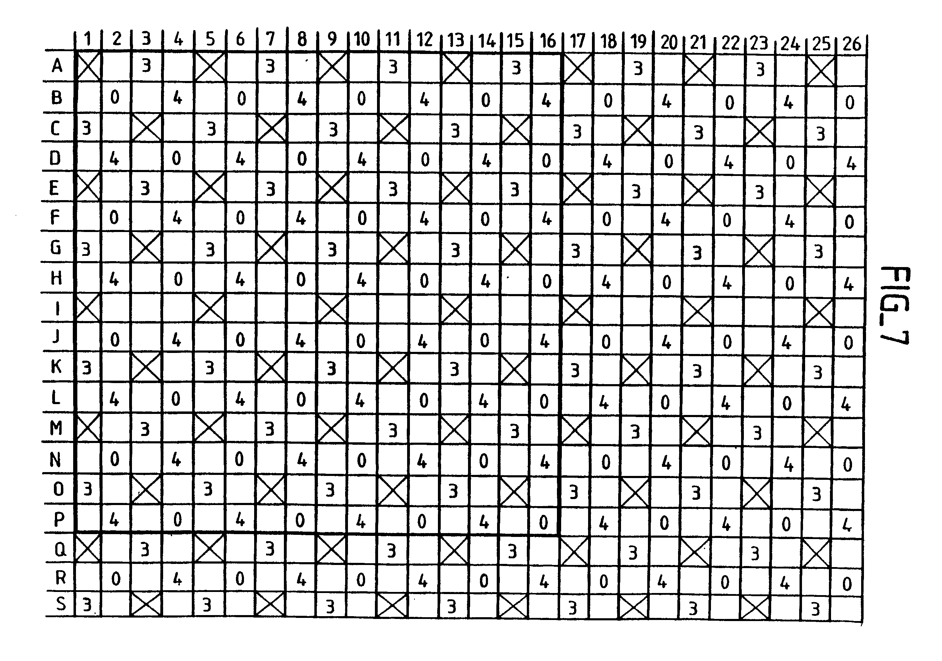

Sur la figure 7, on a représenté le mode 40ms pour des éléments d'images allant de 1 à 26 et pour des lignes allant de A à S. Sur cette figure on a utilisé des croix pour représenter les éléments d'images appartenant à la trame 1, des ronds pour représenter les éléments d'images appartenant à la trame 2.

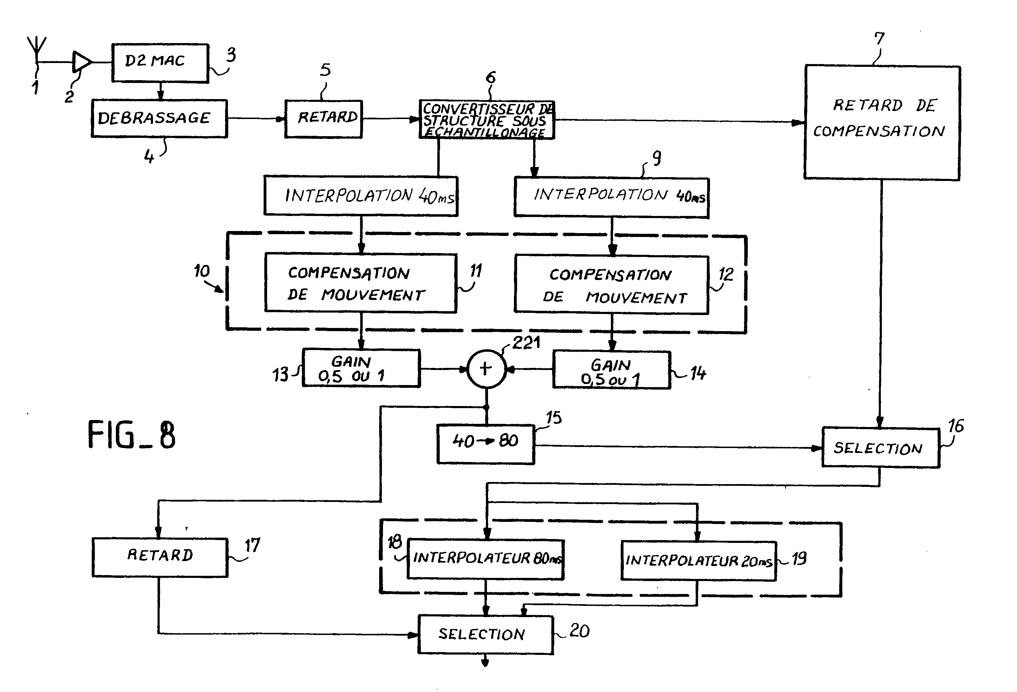

Sur la figure 8, on peut voir un exemple de réalisation d'un récepteur de télévision HD-MAC. Le récepteur est connecté à une source de signal 1 comme par exemple une antenne. L'antenne 1 est connectée à un dispositif d'amplification 2. La sortie du dispositif d'amplification 2 est connectée à l'entrée d'un décodeur D2 MAC 3. La sortie du décodeur D2 MAC 3 est connectée à un dispositif de débrassage 4. La sortie du dispositif de débrassage 4 est connectée à l'entrée d'un dispositif de retard 5. La sortie du dispositif de retard 5 est connectée à l'entrée d'un convertisseur 6. Une première sortie du convertisseur 6 est connectée à l'entrée d'un dispositif de retard de compensation 7. Une deuxième sortie du convertisseur 6 est connectée à l'entrée d'un interpolateur 8. Une troisième sortie du convertisseur 6 est connectée à l'entrée d'un interpolateur 9. Les sorties des interpolateurs 8 et 9 sont connectées à l'entrée d'un dispositif de compensation de mouvement 10.

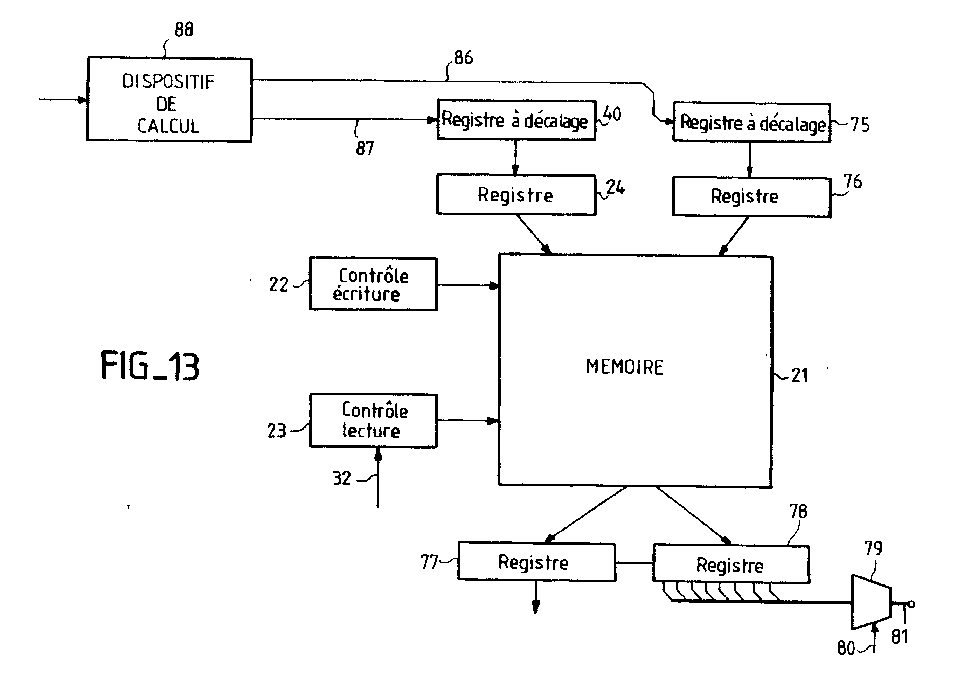

Dans l'exemple illustré sur la figure 8, le dispositif de compensation de mouvement comporte deux éléments de compensation de mouvement 11 et 12. Avantageusement dans le dispositif selon la présente invention, les interpolateurs 8 et 9 ainsi que le dispositif de compensation de mouvement 10 sont réunis en un seul élément comme illustré sur la figure 13. La sortie de l'élément de compensation de mouvement 11 est connectée à un dispositif de gain variable égal à 0,5 ou 1 13. La sortie de l'élément de compensation de mouvement 12 est connectée à l'entrée d'un dispositif à gain variable égal à 0,5 ou 0 14. La sortie de l'élément à gain variable 13 est connectée à une première entrée d'un additionneur 221. La sortie de l'élément à gain variable 14 est connectée à une seconde entrée de l'additionneur 221. La sortie de l'additionneur 221 est connectée à l'entrée d'un dispositif 15 de conversion du mode 40ms en mode 80ms. La sortie du dispositif de conversion 15 est connectée à une première entrée du dispositif de sélection 16 et à l'entrée d'un dispositif de retard 17. La sortie du dispositif du retard de compensation 7 est connectée une seconde entrée du dispositif de sélection 16. La sortie du dispositif de sélection 16 est connectée à un dispositif d'interpolation 220. Dans l'exemple illustré sur la figure 8, le dispositif d'interpolation 220 est composé d'un interpolateur 80ms 18 et un interpolateur 20ms 19. Les sorties des interpolateurs 18 et 19 sont reliés respectivement à deux entrées d'un dispositif de sélection 20. La sortie du dispositif de retard 17 est reliée à une troisième entrée du dispositif de sélection 20. Le dispositif de sélection 20 délivre un signal numérique à afficher, éventuellement après une conversion et une adaptation sur un dispositif d'affichage non illustré sur la figure 8.

Sur la figure 8, on n'a pas illustré le dispositif d'élaboration des signaux de contrôle ni le dispositif d'élaboration du signal d'horloge.

La source de signal 1 fournit le signal de télévision, les signaux de son et les signaux d'assistances comportant des informations concernant le mode de traitement (20ms, 40 ms ou 80ms) appliqué au divers blocs, ainsi que les signaux sur la direction et l'amplitude du mouvement destiné au dispositif de compensation de mouvement 10.

L'amplificateur 2 amplifie les signaux reçus.

Le décodeur D2 MAC 3 effectue l'extraction des signaux reçus.

Le dispositif de débrassage 4 (deshuffler en terminologie anglo-saxonne) effectue la mise en bon ordre séquentiel des signaux afin que ceux-ci soient affichés de façon cohérente pour obtenir un réarrangement des signaux.

Le dispositif de retard 5 (field delays en terminologie anglo-saxonne) assure la mémorisation des éléments d'images transmis sur les trames précédentes afin de reconstituer les structures d'échantillonnage des différents modes.

Le convertisseur 6 (SSPC ou Sub Sampling Pattern Converter en terminologie anglo-saxonne) alimente les différentes voies avec des échantillons correspondant à la structure d'échantillonnage appropriée.

Le dispositif de compensation de retard compense les retards introduits par le traitement de la voie 40ms qui est plus long que celui des autres voies.

Les interpolateurs 8 et 9 traitent le mode 40ms. Les interpolateurs 8 et 9 génèrent à partir d'éléments d'image transmis les éléments d'image manquants.

Le dispositif de compensation de mouvement 10 et les dispositifs à gain variable 13 et 14 constituent le traitement du mode 40ms.

L'additionneur 221 effectue la somme des signaux délivrés par les dispositifs 13 et 14.

Le dispositif 15 convertit les signaux du mode 40ms sous la forme de signaux de 80ms.

Selon le type de bloc traité, le dispositif de sélection 16 sélectionne le signal délivré par le dispositif de retard de compensation 7 ou par le dispositif 15.

L'interpolateur 80ms 18 permet de fournir les éléments d'image qui n'ont pas été transmis dans le mode 80ms.

L'interpolateur 19 permet de fournir les éléments d'image n'ayant pas été transmis dans le mode 20ms.

Le dispositif de retard 17 permet de synchroniser les signaux correspondants aux divers blocs pour tenir compte du retard apporté par le dispositif 15,16 et 220 dans le traitement du signal.

Le dispositif de sélection 20 permet de sélectionner les signaux à afficher. Si à l'émission on signale que le bloc traité est du type 40ms il sélectionnera le signal présent à la sortie du dispositif de retard 17 ; s'il est du type 80ms il sélectionnera le signal présent en sortie de l'interpolateur 18 ; s'il est du type 20ms le dispositif de sélection sélectionnera le signal présent en sortie de l'interpolateur 19.

Le dispositif de télévision de type HD-MAC repose sur le principe que plus le mouvement d'un bloc à l'écran est rapide, moins l'oeil est sensible aux détails que ce bloc contient.

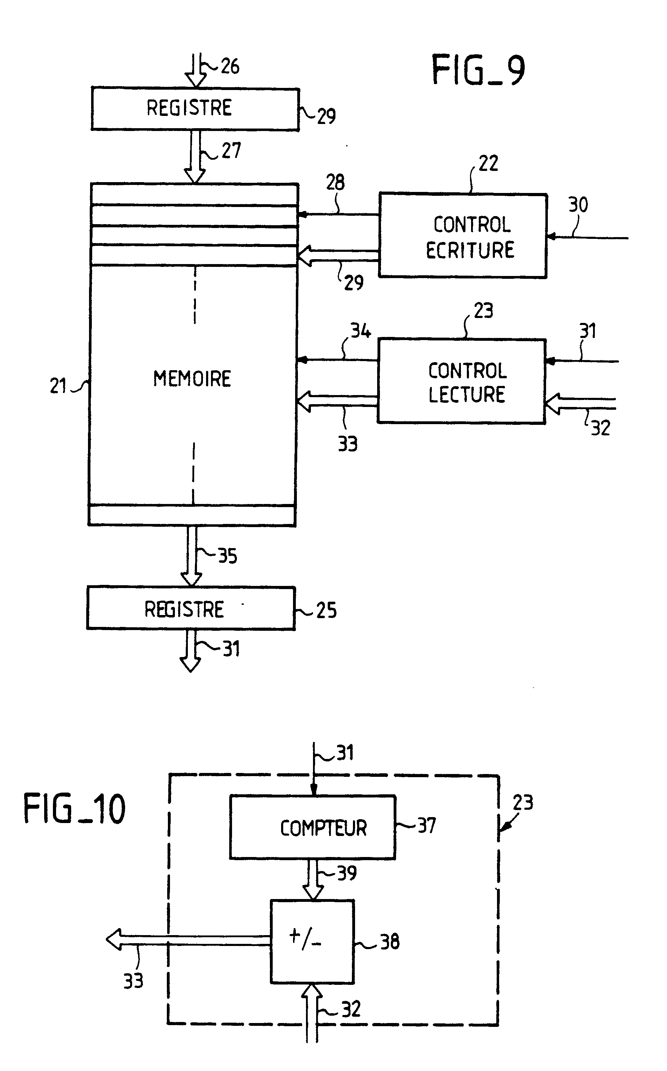

Sur la figure 9, on peut voir un premier exemple de réalisation d'un dispositif de compensation de mouvement selon la présente invention. Le dispositif de la figure 9 comporte un dispositif de mémorisation 21, un dispositif de contrôle d'écriture 22 et un dispositif de contrôle de lecture 23. Le dispositif de mémorisation 21 est par exemple une mémoire vive (RAM en terminologie anglo-saxonne) avantageusement de type dynamique et/ou le type vidéo. Avantageusement, le dispositif selon la présente invention comporte un registre d'entrée 24 et un registre dé sortie 25.

Le registre d'entrée 24 reçoit par un bus de données 26 les valeurs numériques des éléments d'images à afficher.

Lorsque le registre 24 a reçu un nombre d'échantillons égal à sa capacité il transmet par le bus de données 27 au dispositif de mémorisation 2.1 qui les stocke sur commande 28 à l'adresse transmise par le bus d'adresse 29 par le dispositif de contrôle d'écriture 22. Avantageusement, les adresses d'écriture à un dispositif de mémorisation 21 progresse de façon linéaire, c'est-à-dire modulo la capacité du dispositif de mémorisation 21 les données successives provenant du registre 24 sont inscrites aux adresses consécutives.

D'autre part le bus d'adresse écriture 29 est connecté au dispositif de contact lecture 23 pour l'élaboration de l'adresse de lecture.

Le dispositif de contrôle de lecture 23 reçoit sur un bus 32 la valeur des vecteurs de mouvement. Compte tendu de l'adresse d'écriture, il en déduit l'adresse de lecture des éléments d'images à afficher compte tenu du mouvement que le bloc d'éléments d'images traité a subit. Le dispositif de contrôle de lecture 23 contrôle le dispositif de mémorisation 21 par une commande 34 et effectue l'adressage sur un bus d'adresse 33.

Le dispositif de contrôle d'écriture 22 et de contrôle de lecture 23 reçoivent les signaux, respectivement 30 et 31 de commande et de synchronisation.

Dans le dispositif selon la présente invention une simple opération de contrôle d'adresse permet de choisir les éléments à afficher en tenant compte des mouvements qu'ils ont subit.

Il est bien entendu que l'utilisation du dispositif de contrôle d'écriture 22 pour effectuer la compensation de mouvement ne sort pas du cadre de la présente invention. Dans un exemple de réalisation du dispositif selon la présente invention seuls les signaux de luminance sont compensés en mouvement. Dans cet exemple chaque échantillon correspondant à un élément d'image est codé sur un octet. Le nombre de lignes stockées sont par exemple égales au nombre de lignes minimales nécessaires au calcul d'interpolation. Il est par exemple égal à 10 lignes. Chaque ligne est par exemple composée de 108 blocs de 8 éléments d'images.

Sur la figure 10, on peut voir un exemple de réalisation d'un dispositif 22 ou 23 destiné à la génération des adresses du dispositif de mémorisation 21 pour tenir compte des vecteurs de mouvement. La figure 10 illustre avantageusement le dispositif de contrôle de lecture 23. Le dispositif 23 comporte un compteur 37, un additionneur ou soustracteur 38. Le compteur 37 reçoit un signal de synchronisation et de remise à zéro 31. Le compteur 37 délivre sur un bus 39 la valeur d'adresse à l'additionneur ou soustracteur 38. D'autre part l'additionneur ou soustracteur 38 reçoit par le bus 32 la valeur du vecteur de mouvement à appliquer à la ligne d'image et par le bus 29 la valeur de l'adresse d'écriture. L'additionneur ou soustracteur 38 effectue la somme algébrique de la valeur délivrée par le compteur 37 et du vecteur de mouvement délivré sur le bus 32. L'adresse de lecture est donnée sur le bus d'adresse 33.

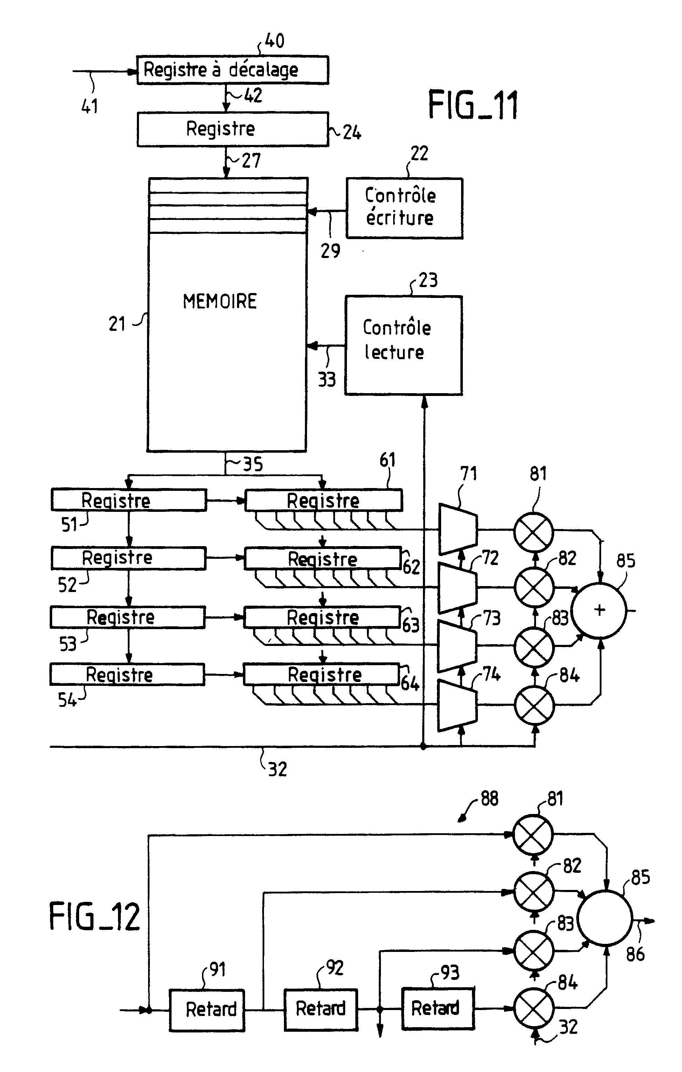

Sur la figure 11, on peut voir un exemple de réalisation d'un dispositif selon la présente invention comportant un dispositif de compensation de mouvement comportant, un dispositif d'interpolation intégrée. Le dispositif de la figure 11 comporte en plus du registre d'entrée 24, du dispositif de mémorisation 21, du dispositif de contrôle d'écriture 22 et du dispositif de contrôle de lecture 23, un registre à décalage 40 connecté par un bus 42 au registre d'entrée 24 et un ensemble d'interpolation connecté au bus 35 en sortie de la mémoire 21. Le dispositif d'interpolation comporte quatre registres à décalage 51 et 61, 52 et 62, 53 et 63, 54 et 64. Avantageusement, chacun des registres à décalage est découpé en deux parties par exemple 51 et 61, chacune susceptible de mémoriser un bloc de 8 éléments d'images. La sortie de la première partie des registres à décalage 51,52,53 ou 54 est connectée à l'entrée de la seconde partie des registres à décalage, respectivement 61,62,63 ou 64. Le registre à décalage 61,62,63 et 64 comporte 8 sorties connectées en parallèle à l'entrée des multiplexeurs à 8 entrées et une sortie respectivement 71,72,73 et 74. La sortie du multiplexeur 71 est connectée à l'entrée d'un multiplieur 81. La sortie du multiplexeur 72 est connectée à l'entrée d'un multiplieur 82. La sortie du multiplexeur 73 est connectée à l'entrée d'un multiplieur 83. La sortie du multiplexeur 74 est connectée à l'entrée du multiplieur 84. Les sorties du multiplieur 81,82,83,84 sont connectées à 4 entrées d'un additionneur 85. Le bus 32 fournit l'information sur le vecteur de mouvement au dispositif de contrôle de lecture 23 aux multiplexeurs 71 à 74 et aux multiplieurs 81 à 84.

Le registre 51 est connecté au registre 52 ; le registre 61 est connecté au registre 62 ; le registre 52 est connecté au registre 53 ; le registre 62 est connecté au registre 63 ; le registre 53 est connecté au registre 54 ; le registre 63 est connecté au registre 64. Ces connexions impliquent la transmission des informations avec le retard de deux lignes d'affichage.

Ainsi, le registre à décalage 51 et 61, 52 et 62, 53 et 63, 54 et 64 mémorise deux blocs d'éléments d'images de 4 lignes successives. Les multiplieurs 81 à 84 et l'additionneur 85 permettent dans le cas où le vecteur de mouvement est pair et/ou, comme illustré sur la figure 5, la ligne de départ à déplacer n'existe pas, de retrouver l'élément d'image nécessaire par interpolation. Les multiplexeurs 71 à 74 permettent de sélectionner l'élément d'image correspondant au déplacement horizontal. Les registres à décalage 51 à 54 mémorisent des éléments d'images qui peuvent s'avérer nécessaires par exemple dans le cas où la valeur maximale du vecteur de mouvement est appliquée à la case gauche des registres respectivement 61 à 64. Les registres 51 à 54 fournissent alors dans les échantillons nécessaires à la continuité de l'image.

Le registre à décalage 40 permet de diminuer le nombre d'accès au dispositif de mémorisation 21 à travers le registre d'entrée 24 en recevant un à un les échantillons contenant les valeurs des éléments d'images. La transmission par le bus 42 s'effectue uniquement quand le registre à décalage 40 est plein. Ainsi il est possible d'utiliser un dispositif de mémorisation 21 ayant un temps d'accès plus long.

Sur la figure 12, on peut voir un dispositif de calcul d'interpolation destiné à être placé avant le dispositif de mémorisation 21 de la figure 11. Ainsi on réduit encore le nombre d'accès au dispositif de mémorisation 21 par unité de temps et donc on peut utiliser le dispositif de mémorisation ayant un temps d'accès supérieur. Le dispositif de calcul de la figure 12 comporte quatre multiplieurs 81 à 84. L'entrée des données vidéo est connectée à l'entrée du multiplieur 81 et d'une ligne à retard 91. La sortie de la ligne à retard 91 est connectée à l'entrée du multiplieur 82 et d'une ligne à retard 92. La sortie de la ligne à retard 92 est connectée à l'entrée du multiplieur 83 à l'entrée d'une ligne à retard 93 et à une sortie 87. La sortie de la ligne à retard 93 est connectée à l'entrée du multiplieur 84. Les sorties des multiplieurs 81 à 84 sont connectées à l'entrée d'un additionneur 85. La sortie de l'additionneur 85 est référencée 86. Les multiplieurs 81 à 84 reçoivent par le bus 32 les valeurs des vecteurs de mouvement à appliquer. Ces sorties 86 présentent la valeur des échantillons calculés correspondant au cas où la composante verticale dy du vecteur de mouvement est paire comme illustré sur la figure 5. La sortie 87 correspondant au cas où la composante verticale des vecteurs de mouvement est impaire telle qu'illustrée sur la figure 4.

Sur la figure 13, on peut voir un exemple préféré du dispositif selon la présente invention. Le dispositif de la figure 13 comporte un dispositif de calcul 88 tel que illustré sur la figure 12. Le dispositif de calcul 88 est connecté par une ligne 86 à un registre de décalage 75. La sortie du registre de décalage 75 est connectée à l'entrée d'un registre 76. La sortie du registre 76 est connectée à l'entrée du dispositif de mémorisation 21. Une sortie 87 du dispositif de calcul 88 est connectée à l'entrée du registre à décalage 40. La sortie du registre à décalage 40 est connectée à l'entrée du registre 24. La sortie du registre 24 est connectée à l'entrée du dispositif de mémorisation 21. Le dispositif selon la présente invention comporte un dispositif de contrôle d'écriture 22, un dispositif de contrôle lecture 23 du dispositif de mémorisation 21. Les sorties du dispositif de mémorisation 21 sont connectées à un registre à décalage composé d'une partie 77 et d'une partie 78 connectées en série. La partie 78 comporte 8 sorties connectées en parallèle à 8 entrées d'un multiplexeur 79. Sur commande 80 le multiplexeur 79 délivre sur la sortie 81 la valeur numérique de l'élément d'image à afficher.

Le registre à décalage 40 et le registre 24 permettent de communiquer à la mémoire 21 les échantillons directs correspondants aux valeurs impaires de la composante verticale dy du vecteur de mouvement. Le registre à décalage 75 et le registre 76 permettent de communiquer au dispositif de mémorisation 21 les échantillons calculés par le dispositif de calcul 88 correspondant au cas où la composante verticale dy du vecteur de mouvement est pair. Le dispositif de contrôle d'écriture 22 transfert séquentiellement tous les 8 cycles d'horloge, le contenu des registres tampons 24 et 76 dans les dispositifs de mémorisation 21. Le dispositif de contrôle de lecture 23 en tant compte de la composante verticale dy du compteur de mouvement transfert 32, tous les 8 cycles d'horloge les données du dispositif de mémorisation 21 vers le registre à décalage 77 et 78. Le multiplexeur 79 choisit sur commande 80 indiquant la composante horizontale dx vecteur de mouvement l'élément d'image à afficher.

Le dispositif de la figure 13 nécessite 4 accès au dispositif de mémorisation pendant le temps disponible qui est de 296ns dans le système HD-MAC. Cela nécessite un temps d'accès au dispositif de mémorisation de 74ns qui est réalisable dans les technologies silicium. Le dispositif selon la présente invention est avantageusement réalisé sous forme de un ou plusieurs circuits intégrés. Dans l'exemple de réalisation le dispositif de mémorisation 21 comportant des mémoires vives (RAM en terminologie anglo-saxonne) dynamique vidéo ainsi qu'à ses circuits périphériques 22,23,24 et 76, le circuit de calcul 88 fait partie de l'autre circuit intégré. Dans t'exemple de réalisation décrit la compensation de mouvement vertical est effectuée dans le dispositif de mémorisation 21 tandis que la compensation de mouvement horizontale dans des registres à décalage externe. Il est bien entendu que l'inversion de ces deux fonctions ne sort pas du cadre de la présente invention.

La présente invention s'applique principalement à la compensation de mouvement dans l'affichage d'images. La présente invention s'applique notamment à la réalisation de télévisions haute définition selon la norme HD-MAC.

## Revendications

1. Dispositif de compensation de mouvement pour récepteur de télévision permettant de reconstituer une image non transmise à afficher à partir d'images transmises et d'informations sur l'évolution de ces images caractérisé par le fait qu'il comporte des moyens de mémorisation (21), des moyens de contrôle d'écriture (22) et des moyens de contrôle de lecture (23) permettant, par modification de l'ordre de lecture par rapport à l'écriture et par le choix d'éléments d'images stockées de reconstituer les images manquantes.

2. Dispositif selon la revendication 1, caractérisé par le fait que le dispositif de contrôle d'écriture (22) fournit au dispositif de mémorisation (21) les adresses dont la progression est arithmétique et que le réarrangement d'informations de façon à obtenir la compensation de mouvement est effectué par le dispositif de contrôle de lecture (23).

3. Dispositif selon la revendication 1 ou 2, caractérisé par le fait qu'il comporte des moyens d'interpolation (51, 61, 52, 62, 53, 63, 54, 64, 81, 82, 83, 84, 85) permettant de reconstituer les éléments d'âges non transmis à partir d'éléments d'images transmis.

4. Dispositif selon la revendication 3, caractérisé par le fait que les moyens d'interpolation (51, 61, 52, 62, 53, 63, 54, 64, 81, 82, 83, 84, 85) permettent de reconstituer, par interpolation, des éléments d'images source à partir desquels on calcule les éléments d'images à afficher en utilisant l'information d'évolution dans le temps des images.

5. Dispositif selon la revendication 1,2,3 ou 4, caractérisé par le fait que les moyens de mémorisation (21) comportent les mémoires vives électroniques dynamiques vidéo (D RAM VIDEO).

6. Dispositif selon la revendication 5, caractérisé par le fait qu'il comporte des moyens (40, 24, 75, 76, 77, 78) permettant d'augmenter le temps d'accès au dispositif de mémorisation (21) sans diminuer le débit.

7. Dispositif selon la revendication 3,4,5 ou 6, caractérisé par le fait que les moyens d'interpolation comportent, connectés à la sortie des moyens de mémorisation (21) une pluralité de registres à décalage (51, 61 ; 52, 62 53, 63 ; 54, 64) dont les sorties sont connectées à des multiplexeurs (71,72,73,74), comportant des moyens de sommation (85) additionnant les valeurs sélectionnées par le multiplexeur (71,72,73,74) les registres à décalage (51, 61 ; 52, 62 ; 53, 63 ; 54, 64) sont connectés en série de façon à ce que entre deux registres à décalage successifs il existe un retard d'une ligne d'image.

8. Dispositif selon la revendication 7, caractérisé par le fait qu'il comporte des multiplieurs (81,82,83,84) connectés aux sorties des multiplexeurs (71,72,73,74) permettant de multiplier les valeurs sélectionnées par des coefficients.

9. Dispositif selon la revendication 7 ou 8, caractérisé par le fait que le dispositif comporte en sortie 4 registres à décalage (51,61 ; 52,62 ; 53,63 ; 54,64).

10. Dispositif selon la revendication 3,4,5,6,7 ou 8, caractérisé par le fait qu'il comporte un moyen de calcul comprenant trois lignes à retard (91,92,93) induisant chacune un retard d'une ligne d'image, quatre multiplieurs (81, 82, 83, 84) dont les sorties sont connectées aux entrées d'un additionneur (85), les entrées des multiplieurs (81,82,83,84) recevant les valeurs numériques des éléments d'images appartenant à quatre lignes d'images consécutives.

11. Dispositif selon la revendication 10, caractérisé par le fait qu'il comporte connecté à la sortie du dispositif de mémorisation (21) un registre à décalage (77,78) dont les sorties sont connectées à l'entrée d'un multiplexeur (79).

12. Récepteur d'émission de télévision caractérisé par le fait qu'il comporte un dispositif selon l'une quelconque des revendications 1 à 11.

13. Récepteur de télévision selon la revendication 12, caractérisé par le fait que ledit récepteur est un récepteur de télévision d'émission à haute définition (TVHD).

# FIG_1

Tn-1

$Psa(x,y)$

Tn

$Pi(x,y)$

Tn+1

$Psc(x,y)$

20ms

20ms

t

# FIG_2

Tn-1

$P_{SA}(x+dx,y+dy)$

dy

dx

$P_{SA}(x,y)$

Tn

$Pi(x,y)$

Tn+1

$Psc(x,y)$

-dx

-dy

$Psc(x-dx,y-dy)$

20ms

20ms

# FIG_3

# FIG_4

# FIG_5

FIG_6-c

FIG_6-b

FIG_6-a

20ms

40ms

80ms

# FIG_7

FIG_8

EP 0 424 269 A1

FIG_9

REGISTRE ~29

~26

~27

28

CONTROL ECRITURE ~22

30

29

MEMOIRE

21

34

CONTROL LECTURE ~23

31

33

32

~35

REGISTRE ~25

~31

FIG_10

31

COMPTEUR ~37

23

~39

+/− ~38

33

32

FIG_11

Registre à décalage — 40

41

42

Registre — 24

27

Contrôle écriture — 22

29

MEMOIRE

21

Contrôle lecture — 23

33

35

61

Registre — 51

Registre

Registre — 52

Registre — 62

Registre — 53

Registre — 63

Registre — 54

Registre — 64

71

72

73

74

81

82

83

84

85

+

32

FIG_12

88

81

82

85

83

86

84

91

92

93

Retard

Retard

Retard

32

FIG_13

EP 0 424 269 A1

**88** DISPOSITIF DE CALCUL

**86**

**87**

Registre à décalage **40**

Registre à décalage **75**

Registre **24**

Registre **76**

**22** Contrôle écriture

**23** Contrôle lecture

**32**

MEMOIRE **21**

**77** Registre

Registre **78**

**79**

**80** **81**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 862 267  (C.H. GILLARD et al.) * Colonne 4, lignes 18-26; colonne 16, lignes 25-65; colonne 17, ligne 49 - colonne 18, ligne 32; colonne 18, ligne 67 - colonne 19, ligne 42 * | 1,2,12 | H 04 N    7/00 H 04 N    5/907 |
| Y | | 1-4,12 | |
| A | --- | 7-11 | |
| X | S.M.P.T.E. JOURNAL, vol. 96, no. 5, partie 1, mai 1987, pages 460-465, White Plains, NY, US; G.A. THOMAS: "HDTV bandwidth reduction by adaptive subsampling and motion-compensation DATV techniques" * Page 462, ligne 44 - page 463, colonne de gauche, ligne 2 * --- | 1,3,12, 13 | |
| Y | 16TH INTERNATIONAL TV SYMPOSIUM, Montreaux, 17 - 22 juin 1989, symposium record, broadcast sessions, pages 37-52; F.W.P. VREESWIJK et al.: "HDMAC coding for compatible broadcasting of high definition television signals" * Résumé; page 44, paragraphe 4.2 * --- | 1-4,12 | |
| A | IDEM --- | 13 | |
| A | US-A-4 746 979  (KAZUO KASHIGI) * Figure 2; colonne 1, lignes 57-61 * --- | 2,6 | |
| A | EP-A-0 294 282  (THOMSON GRAND PUBLIC) * Figure 3 * ---                      -/- | 4 | |

**DOMAINES TECHNIQUES RECHERCHES (Int. Cl.5)**

H 04 N

Le présent rapport a été établi pour toutes les revendications

| Lieu de la recherche | Date d'achèvement de la recherche | Examinateur |
|---|---|---|
| LA HAYE | 21-12-1990 | BOSCH F.M.D. |

Office européen
des brevets

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 864 402  (NORIO EBIHARA et al.)<br>* Figures 3,5; colonne 4, ligne 51 - colonne 5, ligne 13 *<br>----- | 5,6 | |
| | | | DOMAINES TECHNIQUES RECHERCHES (Int. Cl.5) |

Le présent rapport a été établi pour toutes les revendications

| Lieu de la recherche | Date d'achèvement de la recherche | Examinateur |
|---|---|---|
| LA HAYE | 21-12-1990 | BOSCH F.M.D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                                             

& : membre de la même famille, document correspondant

EPO FORM 1503 03.82 (P0402)